# DEMANDE DE BREVET EUROPEEN

(11) **EP 3 308 902 A1**
(43) Date de publication de la demande: **18.04.2018**
(21) Numéro de dépôt: 17191138.1
(22) Date de dépôt: 14.09.2017
(51) Int. Cl.: B23P 21/00, B23K 37/04, B23K 37/047, B25J 9/00, B62D 65/18

(54) **INSTALLATION ET PROCEDE D'ASSEMBLAGE D'ELEMENTS DE CARROSSERIE AVEC CHANGEMENT D'OUTIL PAR ROTONDE**

(30) Priorité: 13.10.2016 FR 1659898
(71) Demandeur: PSA Automobiles SA, 78300 Poissy (FR)
(72) Inventeur: EPERT, DIDIER, 22190 PLERIN (FR); LEDO, FREDERIC, 35190 TINTENIAC (FR); JOLIVEAU, PHILIPPE, 35310 CINTRE (FR); POENCES, GUILLAUME, 35700 RENNES (FR); MORISSET, PHILIPPE, 35740 PACE (FR)
(74) Mandataire: Fosse, Danièle

(57) **Abrégé**

L'invention concerne une installation (1) pour l'assemblage de pièces de carrosserie, comprenant une tourelle rotative (3) motorisée portant au moins deux outils de conformation (5) répartis autour de son axe de rotation vertical; au moins un poste de chargement (15) pour le chargement d'un ensemble (21) de pièces sur un outil de conformation (5); un poste d'assemblage (7) comprenant une pluralité de robots d'assemblage (9, 11) et un robot manipulateur (13) configuré pour pouvoir déplacer l'ensemble (21) de pièces et pour l'évacuer une fois assemblé. Les postes de chargement (15) et d'assemblage (7) sont disposés en périphérie de la tourelle rotative (3) et la tourelle rotative (3) est configurée pour pouvoir déplacer un outil de conformation (5) depuis le poste de chargement (15) jusqu'au poste d'assemblage (7) et inversement, par rotation autour de son axe. L'invention concerne également un procédé d'assemblage mettant en oeuvre une telle installation.

## Description

L'invention se situe dans le domaine des chaines d'assemblage d'éléments de carrosserie, par exemple des chaînes destinées à équiper les usines de fabrication de véhicules automobiles. En particulier l'invention concerne une installation pour l'assemblage de pièces de carrosserie pour la fabrication de côtés de caisse de véhicules automobiles par soudage ainsi qu'un procédé d'assemblage de telles pièces pouvant être mis en oeuvre au moyen d'une telle installation.

Il est connu d'utiliser des chaines d'assemblages automatisées mettant en oeuvre une pluralité de robots pour l'assemblage d'éléments de carrosserie.

Les pièces à assembler sont disposées sur un outil de conformation, qui comprend un châssis portant divers organes de positionnement et de bridage. Ces organes vont permettre un maintien provisoire des pièces dans leur configuration d'assemblage, avant leur fixation définitive qui peut être faite par exemple par soudage. L'outil de conformation est donc adapté à la silhouette du véhicule concerné, si bien qu'il est nécessaire de procéder à un remplacement d'outil lorsqu'une autre silhouette de véhicule est produite.

A cet effet, des aires de stockage comprenant une rangée de plateaux fixes de stockage sont agencées le long de la ligne d'assemblage. Un robot manipulateur peut y déposer un outil retiré de la ligne et en prélever un autre destiné à le remplacer. Malheureusement, les bras motorisés de ces installations présentent des limites au niveau de leur capacité de portage ou de leur vitesse d'exécution. Or, les temps morts liés à la durée de chargement de l'outil sont préjudiciables à la cadence de production.

Le document EP1147974 décrit une installation comprenant une pluralité de robots positionnés sur une table tournante et permettant de transporter des pièces destinées à être traitées dans une pluralité de stations de travail disposées autour de la périphérie de la table tournante. Chaque robot peut transporter un outil depuis une station de travail jusqu'à la suivante. La rotation de la table tournante déplace les robots d'une station à l'autre tout en supportant les pièces à traiter. Les robots peuvent également être déplacés les uns indépendamment des autres.

Le document US20100044414 décrit une installation pour le soudage de pièces dans laquelle des robots soudeurs sont disposés sur une plaque tournante et opèrent par rotation de la plaque tournante dans différentes cellules de soudage placées selon un agencement circulaire.

Le document ES2245613 va proposer une installation comprenant une base tournante sur laquelle est placé un ensemble de robots. Des objets à traiter sont disposés en périphérie de la base tournante et sont traités successivement par différents robots.

Le document EP2882568 propose une installation dotée d'un poste d'échange automatique d'outils. L'installation décrite comprend un poste d'assemblage avec des robots d'assemblage (par exemple des robots de soudage), et un convoyeur acheminant, depuis un poste de chargement jusqu'au poste d'assemblage, des pièces à assembler et un outil de conformation. Le poste d'échange automatique d'outil de conformation comprend une tourelle rotative élévatrice à axe vertical qui présente une pluralité de porte-outils répartis autour dudit axe. Chaque porte-outil est conçu pour accueillir un outil de conformation. La tourelle comprend un rotor configuré pour pouvoir amener les porte-outils à l'aplomb d'un convoyeur par déplacement angulaire autour de l'axe de la tourelle. La tourelle comprenant également au moins un organe élévateur permettant de déplacer verticalement les porte-outils de manière à pouvoir alternativement retirer ou déposer un outil sur le convoyeur.

Les pièces à assembler sont chargées sur l'outil de conformation au niveau du poste de chargement par un premier robot. Le convoyeur transporte l'outil de conformation et les pièces à assembler jusqu'au poste d'assemblage où elles sont fixées entre elles par exemple par soudage. L'opération de soudage se décompose en deux étapes : d'abord un pointage des pièces dans l'outil de conformation et puis la finition des points de fixation dans la main d'un robot de déchargement. Lorsque nécessaire, l'outil de conformation correspondant à une silhouette spécifique de véhicule est remplacé par un autre modèle via le poste d'échange automatique.

Cette installation et le procédé associé montrent d'excellentes performances à ce jour mais pourraient encore être améliorés. En effet, le nombre d'outils de conformation pouvant être reçus dans le poste d'échange automatique est généralement limité à quatre en raison des masses importantes à déplacer et à soulever au niveau de la tourelle et du diamètre de rotation des outils. Or il serait intéressant de trouver une solution permettant d'augmenter le nombre d'outils sans pour autant augmenter les coûts découlant d'une augmentation des masses à soulever. Par ailleurs, les mouvements de rotation et de déplacement selon l'axe vertical liés au changement d'outil peuvent parfois générer des déconnexions de l'alimentation en électricité et/ou en air desdits outils de conformation. Il existe donc un besoin pour empêcher ou au moins limiter de telles déconnexions qui nuisent à la fiabilité de l'installation. De plus, la mise point des opérations de prise et de dépôt des outils sur le convoyeur s'avère être complexe et mériterait d'être améliorée. Enfin, la cadence de production est généralement de 55 véhicules par heure, et il serait intéressant de pouvoir l'améliorer.

L'invention a pour objectif de répondre à au moins un des inconvénients présentés par l'art antérieur en proposant une nouvelle installation et un nouveau procédé combinant les fonctions de changement d'outils et les fonctions de transfert du poste de chargement au poste d'assemblage.

A cet effet, l'invention a pour objet une installation pour l'assemblage de pièces de carrosserie, l'installation comprenant :
- une tourelle rotative motorisée à axe de rotation vertical, la tourelle portant au moins deux outils de conformation répartis autour de son axe ;
- au moins un poste de chargement comprenant des moyens de chargement d'un ensemble de pièces sur un des outils de conformation ;
- au moins un poste d'assemblage comprenant au moins un robot d'assemblage et au moins un robot manipulateur configuré pour pouvoir déplacer l'ensemble de pièces selon une direction verticale et évacuer ledit ensemble une fois assemblé;
l'installation étant remarquable en ce que les postes de chargement et d'assemblage sont disposés en périphérie de la tourelle rotative et en ce que la tourelle est configurée pour pouvoir déplacer un outil de conformation depuis un des postes de chargement jusqu'au poste d'assemblage et inversement, par rotation autour de son axe.

Selon des modes particuliers de réalisation, l'installation selon l'invention peut comprendre l'une ou l'autre des caractéristiques suivantes, prises isolément ou selon toutes les combinaisons possibles :
- L'installation comprend un seul poste d'assemblage.
- La tourelle porte une pluralité d'outils de conformation, de préférence entre 2 et 8 outils de conformation, de préférence encore entre 4 et 6 outils de conformation.
- La tourelle porte une pluralité d'outils de conformation différents les uns des autres.
- L'installation comprend un deuxième poste de chargement.
- Le ou les outils de conformation sont portés par des porte-outils solidaires de la tourelle, de sorte à ce que la tourelle rotative entraîne solidairement l'ensemble des outils de conformation en rotation autour de son axe.
- La tourelle rotative comprend au niveau de son axe de rotation un joint tournant agencé pour permettre l'alimentation en énergie des outils de conformation, de préférence en continu.

Selon un mode de réalisation particulier de l'invention, le ou au moins un des postes d'assemblage (ou chacun des postes d'assemblage) peut comprendre une ou plusieurs des caractéristiques suivantes :
- Le poste d'assemblage comprend deux robots manipulateurs.
- Le poste d'assemblage comprend au moins deux robots d'assemblage, de préférence le poste d'assemblage comprend une pluralité de robots d'assemblage.
- Le poste d'assemblage comprend une plateforme supportant au moins un premier robot d'assemblage et ladite plateforme est superposée à la tourelle rotative.
- Le poste d'assemblage comprend en outre au moins un deuxième robot d'assemblage disposé en périphérie de ladite tourelle et en regard du ou des premiers robots d'assemblage, et l'installation est agencée pour que lorsqu'un outil de conformation est au poste d'assemblage, ledit outil de conformation soit disposé entre au moins un premier robot d'assemblage et au moins un deuxième robot d'assemblage.
- Les premiers et deuxièmes robots d'assemblage sont fixes par rapport à la tourelle rotative.
- La plateforme est suspendue à un portique configuré pour enjamber l'ensemble formé par la tourelle et les outils de conformation, l'ensemble formé par le portique et la plateforme étant configuré pour qu'il subsiste un espacement entre la plateforme et la tourelle.
- La plateforme est suspendue à un portique configuré pour enjamber l'ensemble formé par la tourelle et les outils de conformation, l'ensemble formé par le portique et la plateforme étant configuré pour qu'il subsiste un espacement entre le portique et les outils de conformation de manière à autoriser un défilement des outils de conformation passant sous le portique.

Quel que soit le mode de réalisation choisi, l'installation comprend de préférence une tourelle rotative polyvalente comprenant un plateau sur lequel sont fixés les porte-outils, le pourtour du plateau présentant une forme géométrique à dix sommets résultant de l'union d'un carré et d'un hexagone régulier, de sorte à permettre au choix la fixation soit d'un ensemble de quatre porte-outils ou de six porte-outils sur ledit plateau.

Comme on l'aura compris à la lecture de la définition qui vient d'en être donnée, et selon un premier aspect, l'invention est remarquable en ce que la tourelle présente une double fonction d'une part, de poste d'échange automatique d'outil en portant au moins deux outils de conformation différents ; et d'autre part, de moyen de transfert du poste de chargement au poste d'assemblage et inversement. Selon un second aspect, elle offre une diminution des surfaces d'implantation par l'utilisation d'une plateforme suspendue au-dessus de la tourelle rotative, ce qui permet de superposer en partie le poste d'assemblage, et donc d'au moins une partie des robots d'assemblage, à ladite tourelle. Selon un troisième aspect, les outils de conformation sont solidaires de la tourelle rotative et ne sont pas déchargés des porte-outils en vue de leur utilisation ce qui simplifie leur système d'alimentation en énergie puisqu'il n'y a plus besoin d'une opération de connexion pour pouvoir les utiliser. En effet, l'utilisation d'un joint tournant entre le bâti et le plateau de la tourelle rotative permet une alimentation en continu en énergie des outils de conformation. L'installation est ainsi plus fiable. L'installation peut également adopter une cadence de production plus élevée puisqu'il est possible d'effectuer le bridage des pièces dans l'outil de conformation pendant le transfert de l'outil de conformation entre le poste de chargement et le poste d'assemblage. Selon un quatrième aspect, l'utilisation, dans la tourelle rotative, d'un plateau d'une forme spécifique rend l'installation convertible en ce qu'elle peut évoluer entre une tourelle rotative portant quatre outils de conformation à une tourelle rotative portant six outils de conformation.

L'invention a également pour objet un procédé d'assemblage de pièces de carrosserie comprenant les étapes suivantes :
a) dépôt au niveau d'un poste de chargement, par un premier robot manipulateur, d'un jeu des pièces à assembler dans un outil de conformation ; ledit outil de conformation étant configuré pour brider lesdites pièces selon une conformation d'assemblage prédéterminée ;
b) transfert de l'outil de conformation et des pièces à assembler vers le poste d'assemblage ;
c) assemblage des pièces au niveau dudit poste d'assemblage par fixation desdites pièces les unes sur les autres selon ladite conformation d'assemblage, de préférence par soudage ;
le procédé étant remarquable en ce que l'outil de conformation est porté par une tourelle rotative motorisée à axe de rotation vertical qui porte au moins deux outils de conformation répartis autour de son axe de rotation et en ce que les postes de chargement et d'assemblage sont disposés en périphérie de la tourelle de sorte que l'étape b) de transfert de l'outil de conformation et des pièces à assembler vers le poste d'assemblage s'effectue par une rotation de la tourelle déplaçant ledit outil depuis le poste de chargement jusqu'au poste d'assemblage.

De préférence, le bridage des pièces à assembler dans l'outil de conformation est effectué pendant l'étape b) de transfert de l'outil de conformation et des pièces à assembler vers le poste d'assemblage.

Selon une mise en oeuvre préférée de l'invention, le procédé comprend en outre une étape d) d'évacuation de la pièce terminée et de dépôt sur un poste aval.

Selon des modes particuliers de réalisation, l'étape c) d'assemblage des pièces du procédé selon l'invention peut comprendre l'une ou l'autre des caractéristiques suivantes, prises isolément ou selon toutes les combinaisons possibles :
- L'étape c) d'assemblage des pièces comprend une sous-étape c1) de pointage, au cours de laquelle les pièces sont fixées les unes aux autres selon leur configuration d'assemblage par un premier ensemble de points d'attache.
- L'étape c) d'assemblage des pièces comprend une sous-étape c2) d'extraction, au cours de laquelle l'ensemble de pièces préassemblées selon l'étape c1) est extrait de l'outil de conformation, en le soulevant depuis sa position dans l'outil de conformation.
- L'étape c) d'assemblage des pièces comprend une sous-étape c3) de finition, au cours de laquelle les pièces sont fixées les unes aux autres selon leur configuration d'assemblage par un deuième ensemble de points d'attache.
- L'étape c) d'assemblage des pièces comprend une sous-étape c4) de transfert de l'outil de conformation vide depuis le poste d'assemblage jusqu'au poste de chargement, ou de permutation d'outil de conformation par déplacement d'un nouvel outil sélectionné jusqu'au poste de chargement, l'étape c4) étant effectuée par rotation de la tourelle autour de son axe de rotation.
- La sous-étape c3) de finition est effectuée pendant l'étape c4) de transfert de l'outil de conformation vide depuis le poste d'assemblage jusqu'au poste de chargement, ou de permutation d'outil de conformation.

Comme on l'aura compris à la lecture de la définition qui vient d'en être donnée, le procédé selon l'invention est remarquable en ce qu'il permet une cadence de production accrue en réalisant simultanément des opérations qui étaient auparavant réalisées successivement. Ainsi selon un premier aspect, le temps de permutation d'outil est réduit puisque les outils ne sont plus chargés et déchargés d'un poste d'échange automatique mais sélectionnés par déplacement angulaire de la tourelle de façon à placer l'outil de conformation choisi devant le poste de chargement. Ainsi, de manière avantageuse, non seulement un changement d'outil va prendre un temps équivalent à un simple retour de l'outil de conformation vide jusqu'au poste de chargement, mais en plus il est possible que ce temps soit un temps masqué en ce que ce changement d'outil ou ce retour de l'outil vide va être effectué en même temps que l'étape d'assemblage, ou plus particulièrement que la sous-étape c3) de finition dans l'étape d'assemblage. Selon un deuxième aspect, du temps est encore gagné en permettant à l'outil de conformation d'effectuer le bridage des pièces à assembler durant son transfert depuis le poste de chargement jusqu'au poste d'assemblage. Les différents aspects permettent une optimisation du temps avec une diminution des temps morts pour les robots d'assemblage. L'invention permet une augmentation de la cadence de production de 55 à 63 véhicules par heure par exemple.

L'invention sera bien comprise et d'autres aspects et avantages apparaîtront clairement à la lecture de la description qui suit, donnée à titre d'exemple en référence aux planches de dessins annexées sur lesquelles:
- La figure 1 représente l'installation selon l'invention telle que vue en perspective selon un premier exemple de réalisation de l'invention.
- Les figures 2 à 6 illustrent les différentes étapes du procédé.
- La figure 7 illustre la disposition relative de la plateforme et de la tourelle.
- La figure 8 représente la forme spécifique du plateau de la tourelle lui donnant un caractère convertible.

Dans la description qui suit, le terme « comprendre » est synonyme de « inclure » et n'est pas limitatif en ce qu'il autorise la présence d'autres éléments dans l'installation ou d'autres étapes du procédé auquel il se rapporte. Il est entendu que le terme « comprendre » inclut les termes «consister en». « Inférieur » désignera une proximité au sol plus importante que « supérieur » selon l'axe vertical. Sur les différentes figures, les mêmes références désignent des éléments identiques ou similaires.

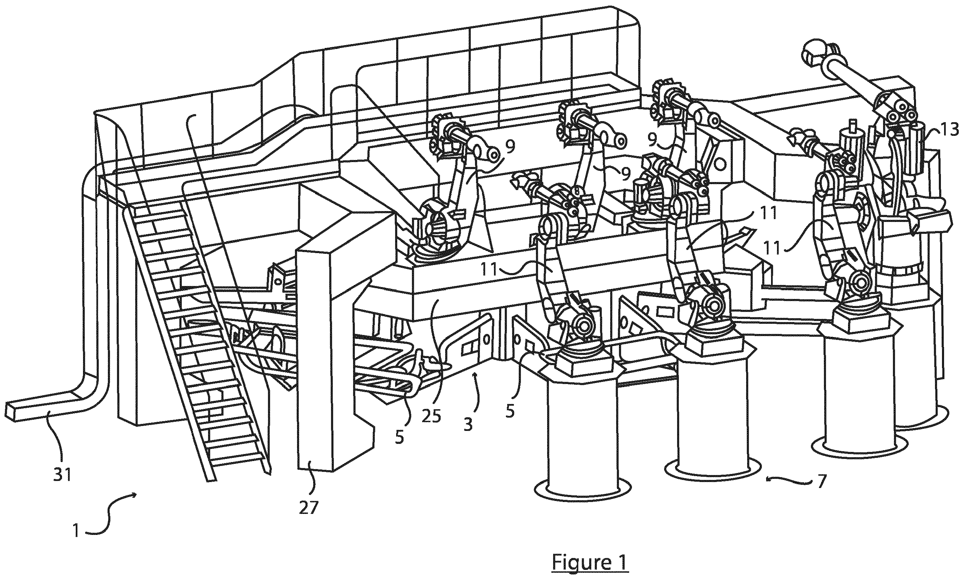

On se référera en premier lieu à la figure 1 montrant une vue en perspective de l'installation 1 selon un exemple de réalisation de l'invention. L'installation 1 comprend :
- une tourelle 3 rotative motorisée à axe de rotation vertical, la tourelle 3 portant au moins deux outils de conformation 5, et de préférence une pluralité d'outils de conformation 5, répartis autour de son axe ;
- au moins un poste de chargement (non visible sur la figure 1) comprenant des moyens de chargement d'un ensemble de pièces sur un outil de conformation ;
- au moins un poste d'assemblage 7 comprenant une pluralité de robots d'assemblage (9, 11) et au moins un robot manipulateur 13 configuré pour pouvoir déplacer l'ensemble de pièces selon une direction verticale et évacuer ledit ensemble une fois assemblé ;
l'installation 1 étant remarquable en ce que les postes de chargement et d'assemblage 7 sont disposés en périphérie de la tourelle rotative 3 et en ce que la tourelle rotative 3 est configurée pour pouvoir déplacer un outil de conformation 5 depuis le poste de chargement jusqu'au poste d'assemblage 7 et inversement, par simple rotation autour de son axe.

L'installation 1 est destinée à l'assemblage de pièces de carrosserie (non représentées sur la figure 1). Les pièces de carrosserie sont de préférence en matériau métallique. L'emploi d'autres matériaux tels que du verre feuilleté, des matériaux composites tels que par exemple des résines époxy renforcées en fibres de verre ou de carbone, ou encore des matériaux plastiques de type polypropylène ou polycarbonate, est également envisageable dans le cadre de l'invention. Les pièces de carrosserie auront avantageusement été préalablement préformées par moulage ou par emboutissage.

L'installation 1 selon l'invention se destine préférentiellement à l'assemblage de véhicules terrestres comme par exemple des véhicules automobiles mais peut également être mise en oeuvre pour d'autres types de véhicules et dans d'autres types d'industrie telle que par exemple dans l'industrie aéronautique.

Dans l'exemple de réalisation décrit, l'installation 1 va permettre l'assemblage par soudage de côtés de caisse de véhicule donc par exemple l'assemblage d'une pièce de tôle formant une peau avec deux éléments de renfort de type anneau avant et arrière (ou custode).

L'installation est de préférence automatisée dans son ensemble afin de garantir une cadence élevée de production avec une bonne reproductibilité.

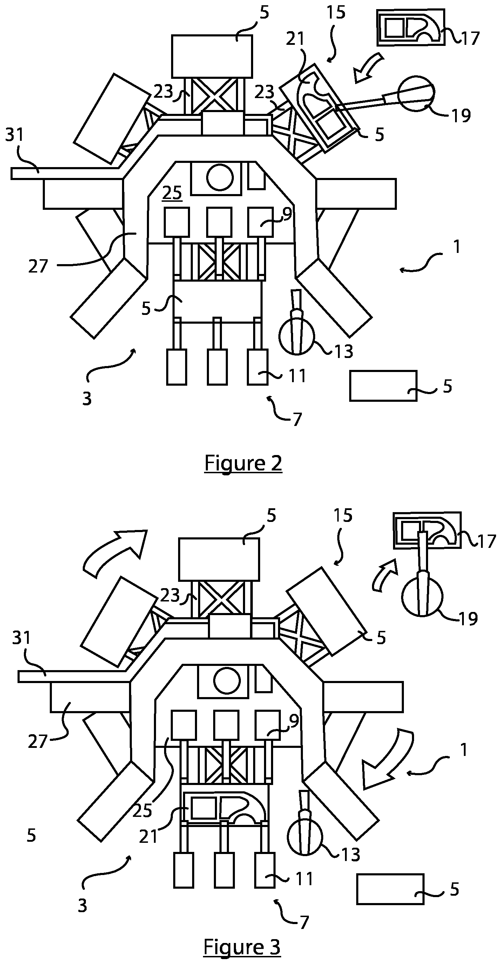

La description de l'installation va maintenant se poursuivre en parallèle de la description du procédé d'assemblage selon l'invention et en référence aux figures 2 à 6.

Comme on peut le voir sur la figure 2 dans l'exemple de réalisation décrit, l'installation ne comprend qu'un seul poste de chargement 15 et un seul poste d'assemblage 7, tous deux disposés en périphérie de la tourelle 3 rotative.

Préférentiellement, les moyens de chargement du poste de chargement 15 comprennent un magasin 17 de pièces, et un premier robot manipulateur 19 tel qu'un bras de chargement motorisé multi-axes (par exemple un robot à six axes) conçu pour prélever les pièces nécessaires dans les stocks du magasin 17 et pour les transférer sur un des outils de conformation 5 porté par la tourelle rotative 3. Eventuellement, les moyens de chargement peuvent également comprendre une table de pré-emboitage pour emboîter les pièces entre elles avant leur dépôt dans l'outil de conformation.

Les outils de conformation 5 sont connus et configurés pour l'accueil, la conformation et le bridage, selon une configuration d'assemblage prédéterminée, d'un jeu de pièces détachées ou pré-emboitées devant être assemblées les unes aux autres. Les outils de conformation 5 sont représentés schématiquement sur la figure 2 si bien que leurs éléments constitutifs ne sont pas visibles. Ils comprennent cependant de manière connue un châssis formant une embase, qui porte une pluralité d'accessoires de conformation et de bridage du genre chandelles, butées, pinces, sauterelles, mors, etc. destinés à accueillir, positionner et maintenir provisoirement le jeu de pièces à assembler dans sa configuration d'assemblage en attente du soudage. Les accessoires peuvent être motorisés et inclure par exemple des vérins électriques ou pneumatiques pour ajuster leur position ou déclencher ou relâcher le serrage des pièces.

La figure 2 illustre l'étape a) de dépôt de l'ensemble 21 des pièces à assembler, au niveau du poste de chargement 15 dans un outil de conformation 5. L'outil de conformation 5 est fixé par le biais d'un porte-outil 23 à la tourelle rotative. Selon l'invention la tourelle rotative 3 comprend une pluralité de porte-outils 23 répartis autour de son axe de rotation. Chacun des porte-outils 23 est solidaire d'un outil de conformation 5 spécifique à une silhouette donnée. La tourelle rotative est configurée pour pouvoir amener sélectivement, par un déplacement angulaire approprié autour de son axe, l'outil de conformation 5 sélectionné au niveau du poste de chargement 15. Avantageusement, la tourelle rotative 3 embarque solidairement, en rotation, l'ensemble des outils de conformation 5.

Ainsi comme on l'aura compris, l'étape a) de dépôt est précédée d'une étape de transfert de l'outil de conformation 5 sélectionné depuis la position qu'il occupe alors, jusqu'au poste de chargement 15 et/ou de permutation d'outil de conformation 5 comme nous le verrons plus loin.

Selon l'invention, la tourelle rotative 3 fait ainsi office de magasin rotatif d'outils, de type rotonde, possédant une pluralité d'emplacements porte-outil 23, par exemple entre deux et huit, de préférence entre quatre et six. Pour des raisons d'inertie, les porte-outils 23 présentent des structures similaires et sont distribués régulièrement autour l'axe de rotation de la tourelle 3.

Selon un mode de réalisation de l'invention, l'ensemble 21 de pièces à assembler est déposé conjointement dans l'outil de conformation 5 par un premier robot manipulateur 19, lesdites pièces ayant été pré-emboîtées sur un poste en amont. Néanmoins, il est possible dans le cadre de l'invention que le garnissage de l'outil de conformation 5 se fasse avec les pièces à assembler prises successivement. Par exemple, l'outil de conformation 5 pourra être agencé pour accueillir dans cet ordre et maintenir par une pression exercée par le dessus, la pièce de tôle formant la peau d'un côté de caisse puis successivement les éléments de renfort de type anneau avant et arrière.

On notera que l'installation 1 est ici représentée avec un seul poste de chargement 15. Néanmoins il est possible dans le cadre de l'invention que l'installation comprenne deux postes de chargement, les deux postes de chargement et le poste d'assemblage étant alors préférentiellement répartis régulièrement autour de la tourelle rotative par exemple à 120° les uns des autres. Une telle configuration symétrique permet de réaliser sur la même installation et en simultané les deux côtés de caisse gauche et droit du véhicule. De même, le poste d'assemblage 7 est représenté avec un seul robot manipulateur 13, mais il peut comprendre un deuxième robot manipulateur dans le cas par exemple où l'ensemble des pièces assemblées doit être évacué sur un autre poste en aval que celui auquel le premier robot manipulateur 13 a accès.

Selon l'invention, l'outil de conformation 5 et l'ensemble 21 de pièces à assembler sont ensuite transférés depuis le poste de chargement 15 vers le poste d'assemblage 7 par simple rotation de la tourelle rotative 3 autour de son axe vertical, au cours d'une étape b) de transfert illustrée à la figure 3. Dans notre exemple de réalisation le transfert est effectué par un déplacement angulaire de 120°. Ceci est rendu possible par la configuration de l'installation 1 selon laquelle les postes de chargement 15 et d'assemblage 7 sont tous deux situés en périphérie de la tourelle rotative comme vu plus haut. De préférence, le bridage (c-à-d. la mise en conformation) des pièces se fait simultanément à l'étape b) de transfert.

Comme on l'aura compris la tourelle rotative 3 fait à la fois office de magasin d'outils et de système de transfert desdits outils de conformation 5 depuis un poste jusqu'à un autre. Cette configuration est avantageuse en ce qu'elle permet à la fois de simplifier l'installation 1 par rapport aux dispositifs connus et d'en minimiser l'encombrement. Selon l'invention, les outils de conformation 5 ne sont pas chargés et déchargés des porte-outils 23 en vue de leur utilisation comme c'était le cas dans l'art antérieur. Selon l'invention, les outils de conformation 5 restent en place sur les porte-outils 23 pendant leur utilisation pour le bridage de l'ensemble 21 de pièces à assembler et le transport dudit ensemble 21 de pièces.

Ainsi selon une mise en oeuvre préférée de l'invention, les outils de conformation 5 sont fixés sur les porte-outils 23, de préférence par des moyens de fixation réversibles permettant de retirer au besoin un des outils pour des raisons de manutention. Les outils de conformation 5 sont par exemple vissés ou boulonnés sur les porte-outils 23. Il est ainsi rendu possible que l'outil de conformation 5, ou plus particulièrement ses accessoires de bridage, soient raccordés de manière permanente à un ou plusieurs réseaux d'alimentation en énergie. L'invention ne nécessite donc pas de connexions et déconnexions successives à un réseau d'alimentation en énergie ce qui en augmente sa fiabilité. A cet effet la tourelle rotative, comprenant un bâti, un plateau tournant sur lequel sont fixés les porte-outils et un moteur pour la mise en rotation dudit plateau, va comprendre en outre un joint tournant (non représenté) comprenant une partie fixe et une partie mobile. La partie fixe est solidaire du bâti. La partie mobile tourne avec le plateau. Il donc possible d'alimenter en continu les outils de conformation 5 en air et en électricité par exemple. Cette configuration est avantageuse en ce qu'elle permet d'effectuer simultanément le bridage de l'ensemble 21 de pièces à assembler dans l'outil de conformation 5 et le transfert dudit l'outil de conformation 5 et desdites pièces à assembler vers le poste d'assemblage 7.

Le poste d'assemblage 7 étant situé en périphérie de la tourelle rotative 3, l'installation 1 selon l'invention sera préférentiellement dotée d'une plateforme 25 fixe surplombant ladite tourelle 3. Le poste d'assemblage est donc disposé à cheval sur la tourelle rotative 3 minimisant l'implantation au sol de ladite installation 1.

Ainsi, selon une mise en oeuvre préférée de l'invention, le poste d'assemblage 7 comprend une plateforme 25 supportant au moins un premier robot d'assemblage 9, ladite plateforme 25 étant superposée à la tourelle rotative 3. Avantageusement, la plateforme 25 est suspendue à un portique 27 configuré pour enjamber l'ensemble formé par la tourelle rotative 3 et les outils de conformation 5. En d'autres termes, la plateforme 25 et la tourelle rotative 3 sont disposées de manière étagée, la tourelle rotative 3 étant inférieure à la plateforme 25.

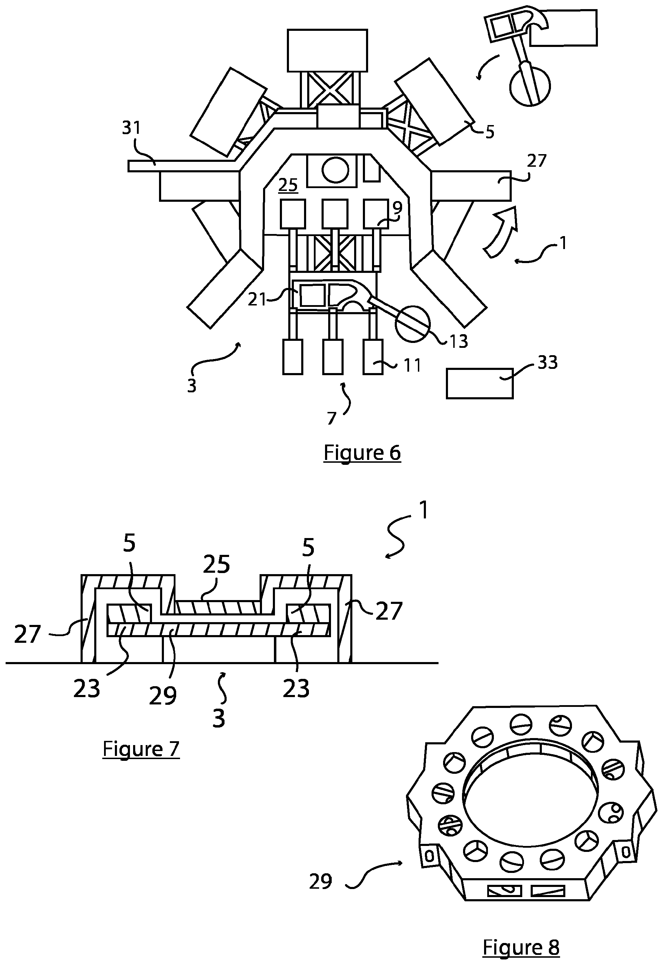

La figure 7 est une vue schématisée en coupe de l'agencement de l'installation selon l'invention. On peut voir la forme spécifique du portique 27 qui va enjamber la tourelle et en particulier l'ensemble formé par les porte-outils 23 et les outils de conformation 5 de manière à ne pas gêner leur défilement en rotation. La plateforme 25 est agencée à une altitude inférieure que l'altitude maximale présentée par le portique 27 lorsqu'il se superpose au couloir de défilement des outils de conformation 5. La plateforme est donc suspendue au-dessus de la tourelle et plus précisément de son plateau 29 tournant. Pour autant, l'homme du métier aura avantage à ce que la plateforme 25 ne soit pas en contact avec ladite tourelle rotative 3 afin de ne pas la gêner dans sa rotation. L'ensemble formé par le portique 27 et la plateforme 25 est configuré pour qu'il subsiste un espacement entre ladite plateforme 25 et la tourelle rotative 23. Cet espacement est par exemple de l'ordre de 10 cm.

Par ailleurs, la plateforme 25 est conçue pour pouvoir encaisser les contraintes mécaniques liées à la présence de robots 9 d'assemblage (par exemple au nombre de trois) fonctionnant simultanément. En revenant à la figure 3, et selon un mode de réalisation de l'invention, on peut voir que le portique 27 va servir de guide à un câble 31 d'alimentation en électricité des premiers robots 9 disposés sur la plateforme 25.

Préférentiellement, le poste d'assemblage 7 comprend en outre au moins un deuxième robot d'assemblage 11 disposé en périphérie de ladite tourelle rotative 3 et en regard du ou des premiers robots d'assemblage 9. Comme on peut le voir, l'installation 1 est agencée pour que le ou les outils de conformation 5 soient disposés entre au moins un premier robot d'assemblage 9 et au moins un deuxième robot d'assemblage 11 lorsqu'ils sont au poste d'assemblage 7. Selon l'invention les outils de conformation 5 et l'ensemble 21 de pièces à assembler sont mobiles avec la tourelle rotative, tandis que les robots d'assemblage (9, 11) sont fixes par rapport à ladite tourelle rotative.

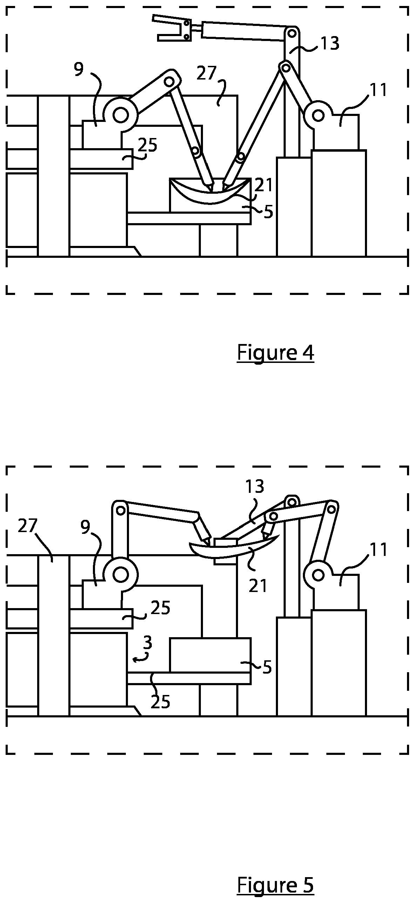

On se référera à présent aux figures 4 et 5 qui illustrent l'étape c) d'assemblage des pièces. Selon l'invention, l'étape c) comprend :
- une sous-étape c1) de pointage, illustrée en figure 4, au cours de laquelle les pièces sont fixées les unes aux autres selon leur configuration d'assemblage par un premier ensemble de points d'attache ;
- une sous-étape c2) d'extraction au cours de laquelle l'ensemble 21 de pièces préassemblées selon l'étape c1) est extrait de l'outil de conformation 5, en le soulevant depuis sa position basse d'origine à une position haute d'altitude supérieure, par exemple au moyen du deuxième robot manipulateur 13 ; et
- une sous-étape c3) de finition, succédant à l'étape c2) et illustrée à la figure 5, au cours de laquelle la fixation des pièces entre elles, est consolidée par un deuxième ensemble de points d'attache. De préférence l'étape c2) est effectuée alors que l'ensemble de pièces 21 est porté par le deuxième robot manipulateur 13, libérant ainsi l'outil de conformation 5 qui est alors vide.

Préférentiellement, et comme illustré sur les figures 4 et 5, les premier et deuxième ensembles de point d'attache sont effectués par les mêmes robots d'assemblage (9, 11) oeuvrant en position basse puis en position haute respectivement.

Selon une mise en oeuvre préférée de l'invention, les robots d'assemblage (9, 11) sont des robots de soudage. Néanmoins, d'autres types de robots peuvent être envisagés en vue de la réalisation d'une jonction mécanique entre deux pièces, tels que par exemple des robots configurés pour réaliser des opérations de brasage, de collage, de rivetage etc.

Avantageusement, l'étape c) d'assemblage des pièces comprend en outre une sous-étape c4) (illustrée en figure 6) de retour de l'outil de conformation au poste de chargement et/ou de permutation d'outil par le placement d'un autre outil au niveau dudit poste de chargement. La tourelle rotative 3 est configurée pour pouvoir tourner aussi bien dans le sens trigonométrique que dans le sens des aiguilles d'une montre et est avantageusement reliée à des moyens de contrôle (non représentés) qui vont calculer le trajet le plus court qu'elle aura à effectuer pour placer l'outil sélectionné au niveau du poste de chargement 15. Préférentiellement, la sous-étape c4) est effectuée simultanément à la sous-étape c3) de finition. Ceci permet de diminuer le temps de cycle, puisque l'outil est débarrassé de l'ensemble de pièces préassemblées dès que ledit ensemble est formé et maintenu de lui-même par le premier ensemble de points d'attache, sans requérir l'assistance des accessoires de bridage qui peuvent donc relâcher leur prise sur lesdites pièces et libérer ledit sous-ensemble.

La finition de l'assemblage peut alors être effectuée en maintenant ledit ensemble 21 de pièces simplement à l'aide d'un robot manipulateur 13.

Une fois la finition de l'assemblage effectuée, la pièce est évacuée vers un poste 33 en aval par ledit robot manipulateur 13 lors d'une étape d) d'évacuation.

Selon un mode de réalisation préféré de l'invention illustré à la figure 8, l'installation comprend une tourelle polyvalente comprenant un plateau 29 sur lequel sont fixés les porte-outils, le pourtour du plateau 29 présente une forme géométrique à dix sommets résultant de l'union d'un carré et d'un hexagone régulier, de sorte à permettre au choix la fixation soit d'un ensemble de quatre porte-outils ou de six porte-outils sur ledit plateau.

## Revendications

1. Installation (1) pour l'assemblage de pièces de carrosserie, l'installation (1) comprenant
- une tourelle rotative (3) motorisée à axe de rotation vertical, la tourelle portant au moins deux outils de conformation (5) répartis autour de son axe ;
- au moins un poste de chargement (15) comprenant des moyens de chargement d'un ensemble (21) de pièces sur un des outils de conformation (5);
- au moins un poste d'assemblage (7) comprenant au moins un robot d'assemblage (9, 11) et au moins un robot manipulateur (13) configuré pour pouvoir déplacer l'ensemble (21) de pièces selon une direction verticale et évacuer ledit ensemble (21) une fois assemblé ;
l'installation (1) étant **caractérisée en ce que** les postes de chargement (15) et d'assemblage (7) sont disposés en périphérie de la tourelle rotative (3) et **en ce que** la tourelle rotative (3) est configurée pour pouvoir déplacer un outil de conformation (5) depuis un des postes de chargement (15) jusqu'au poste d'assemblage (7) et inversement, par rotation autour de son axe.

2. Installation (1) selon la revendication 1, **caractérisée en ce que** le poste d'assemblage (7) comprend une plateforme (25) supportant au moins un premier robot d'assemblage (9) et **en ce que** ladite plateforme (25) est superposée à la tourelle rotative (3).

3. Installation (1) selon la revendication 2, **caractérisée** en que le poste d'assemblage (7) comprend en outre au moins un deuxième robot d'assemblage (11) disposé en périphérie de ladite tourelle rotative (3) et en regard du ou des premiers robots d'assemblage (9), et en ce que l'installation (1) est agencée pour que lorsqu'un outil de conformation (5) est au poste d'assemblage (7), ledit outil de conformation (5) soit disposé entre au moins un premier robot d'assemblage (9) et au moins un deuxième robot d'assemblage (11).

4. Installation (1) selon l'une des revendications 2 ou 3, **caractérisée en ce que** la plateforme (25) est suspendue à un portique (27) configuré pour enjamber l'ensemble formé par la tourelle rotative (3) et les outils de conformation (5), l'ensemble formé par le portique (27) et la plateforme (25) étant configuré pour qu'il subsiste un espacement entre la plateforme (25) et la tourelle rotative (3).

5. Installation (1) selon l'une des revendications 1 à 4 **caractérisé en ce que** le ou les outils de conformation (5) sont portés par des porte-outils (23) solidaires de la tourelle rotative (3), de sorte à ce que la tourelle rotative (3) entraîne solidairement l'ensemble des outils de conformation (5) en rotation autour de son axe.

6. Installation (1) selon l'une des revendications 1 à 5 **caractérisé en ce que** la tourelle rotative (3) comprend au niveau de son axe de rotation un joint tournant agencé pour permettre l'alimentation en énergie des outils de conformation (5).

7. Installation (1) selon l'une des revendications 1 à 6 **caractérisée en ce qu'**elle comprend au moins un deuxième poste de chargement.

8. Installation (1) selon l'une des revendications 1 à 7 **caractérisée en ce qu'**elle comprend une tourelle rotative (3) polyvalente comprenant un plateau (29) sur lequel sont fixés les porte-outils, le pourtour du plateau (29) présentant une forme géométrique à dix sommets résultant de l'union d'un carré et d'un hexagone régulier, de sorte à permettre au choix la fixation soit d'un ensemble de quatre porte-outils ou de six porte-outils sur ledit plateau (29).

9. Procédé d'assemblage de pièces de carrosserie comprenant les étapes suivantes
a) dépôt au niveau d'un poste de chargement (15), par un premier robot manipulateur (19), d'un jeu des pièces à assembler dans un outil de conformation (5); ledit outil de conformation (5) étant configuré pour brider lesdites pièces selon une conformation d'assemblage prédéterminée;
b) transfert de l'outil de conformation (5) et des pièces à assembler vers le poste d'assemblage (7);
c) assemblage des pièces au niveau dudit poste d'assemblage (7) par fixation desdites pièces les unes sur les autres selon ladite conformation d'assemblage, de préférence par soudage ;
le procédé étant **caractérisé en ce que** l'outil de conformation (5) est porté par une tourelle rotative (3) motorisée à axe de rotation vertical qui porte au moins deux outils de conformation (5) répartis autour de son axe de rotation, et **en ce que** les postes de chargement (15) et d'assemblage (7) sont disposés en périphérie de la tourelle rotative (3) de sorte que l'étape b) de transfert de l'outil de conformation (5) et des pièces à assembler vers le poste d'assemblage (7) s'effectue par une rotation de la tourelle rotative (3) déplaçant ledit outil de conformation (5) depuis le poste de chargement (15) jusqu'au poste d'assemblage (7).

10. Procédé selon la revendication 9 **caractérisé en ce que** le bridage des pièces à assembler dans l'outil de conformation (5) est effectué pendant l'étape b) de transfert dudit l'outil de conformation (5) et des pièces à assembler vers le poste d'assemblage (7).
